# EUROPEAN PATENT APPLICATION

(11) **EP 3 501 352 A1**
(43) Date of publication of application: **26.06.2019**
(21) Application number: 17209850.1
(22) Date of filing: 21.12.2017
(51) Int. Cl.: A47J 37/08

(54) **TOASTER MACHINE AND SYSTEM FOR PROVIDING CONSISTENCY**

(71) Applicant: Vestel Elektronik Sanayi ve Ticaret A.S., 45030 Manisa (TR)
(72) Inventor: DEMIR, Murat, 45030 Manisa (TR)
(74) Representative: Ascherl, Andreas

(57) **Abstract**

A system (1) for providing consistency in cooking from a toaster machine (2) comprising a temperature sensor (3) coupled to one or more plates (4) of the toaster machine (2), adapted to sense a temperature of the plate (4) of the toaster machine (2) at a given point of time and to generate a temperature value (5), a timer (6) adapted to count in a time (7) since the start of the cooking, and a memory device (8) adapted to receive the temperature values (5) from the temperature sensor and the time (7) since the start of cooking from the timer (6), and adapted to store the temperature values (5) against the time (7) in a lookup table (9).

## Description

This invention refers to a system for providing consistency in cooking from a toaster machine according to claim 1, a toaster machine according to claim 8, and a method for providing consistency in cooking from a toaster machine according to claim 9.

### Background of the Invention

Toasting and frying can be done with toaster machines. However, consistency in the heating and frying operation is seldom achieved. Even if the same user is working onto the same toaster machine, the consistency of a desired result might also not be achieved. Also, the most skillful chefs are not able to keep the consistency to more accurate desired results. This problem is further enhanced when the toasting and frying is being carried out by different people who are not used to of cooking over the toaster machine, or who do not know to handle the toaster machine according to the result required by a particular user. Unfortunately, there is no standardization for heating and frying.

Further, most of the toaster machines do not take in consideration the pressure being applied by the plates of the toaster onto the food. Pressure is another factor, which is important for the cooking of food in the toaster machine. Hence for a desired result of cooking in the toaster machine, maintenance of a particular pressure is also desired.

US Patent Publication No. US20040144257A1 discloses a toast machine comprising a microcontroller. This toaster includes a temperature sensor and a timer. The temperature and time information obtained from the sensor and the timer are transmitted to the microcontroller and the cooking process is kept under control.

### Object of the Invention

It is therefore the object of the present invention is to provide a mechanism to provide a consistency in cooking from a toaster machine.

### Description of the Invention

The before mentioned object is solved by a system for providing consistency in cooking from a toaster machine according to claim 1.

According to the invention a system for providing consistency in cooking from a toaster machine is achieved which comprises a temperature sensor coupled to one or more plates of the toaster machine, adapted to sense a temperature of the plate of the toaster machine at a given point of time and to generate a temperature value, a timer adapted to count since the start of the cooking, and a memory device adapted to receive the temperature values from the temperature sensor and the time since the start of cooking from the timer, and adapted to store the temperature value against the time in a lookup table.

This embodiment is helpful, as it generates a cooking profile with respect to temperature of the plates to be maintained at a particular time of cooking in a lookup table for a desired result from a cooking operation. This lookup table can later be utilized, either manually or through automatic procedure to maintain the temperature level of the plates later on to achive similar results of the cooking operation.

Further preferred embodiments are subject-matter of dependent claims and/or of the following specification parts.

According to a preferred embodiment of the invention, the system comprises a pressure sensor coupled to one or more plates of the toaster machine, adapted to sense a pressure being exerted by the plate onto a food kept onto the plate, or between the plates at a given point of time and to generate a pressure value, wherein the memory device is adapted to receive the pressure value from the pressure sensor and to store the pressure value against the time in the lookup table.

This embodiment is beneficial as it provides capturing the pressure exerted by the plate/s onto the food being cooked into the lookup table, thus helping to build more relaibility and consistency in the cooking mechanism required for desired result from a cooking operation.

According to a further preferred embodiment of the system, the pressure sensor is coupled to a top plate and adapted to sense the pressure exerted by the top plate onto the food kept within the toaster.

This embodiment is helpful, as it provides for capturing the pressure exerted by the top plate of the toaster onto the food being cooked. Capturing pressure being exerted by the top plate is a reliable parameter to be captured and further required to be maintained to reach the desired result of the cooking mechanism.

According to another embodiment of the invention, the system comprises a record control adapted to regulate at least one of the sensors to be switched on or off.

This embodiment is helpful, as it provides a mechanism to regulate the sensors. The sensors are required to be functioning when the lookup table is to be prepared with respect to a particular cooking operation.

According to a further embodiment of the invention, the system comprises an input unit adapted to receive a selection of a default profile, a processing unit adapted receive the selection of the default profile, and based on the selection adapted to access the lookup table from the memory device, and adapted to generate a temperature regulation trigger, and a temperature regulator adapted to receive the temperature regulation trigger and to regulate temperature of one or more plates of the toaster machine based on the temperature regulation trigger.

This embodiment is helpful, as it provides cooking the food according to a desired result of cooking operation in an automatic way.

According to another embodiment of the system, the processing unit is adapted to generate a pressure regulation after accessing the lookup table, and the system comprises a pressure regulator adapted to receive the pressure regulation trigger and to regulate pressure exerted by one or more plates of the toaster machine onto the food, based on the pressure regulation trigger.

This embodiment is helpful, as it also regulates pressure exerted by the plates on the food for providing a desired result of the cooking operation.

According to a further embodiment of the system, the pressure regulator is adapted to regulate pressure exerted by the top plate of the toaster machine based on the regulation trigger.

This embodiment is beneficial, as it provides a regulation of the pressure of the top plate being exerted onto the food. The pressure exerted by the top plate is critical while cooking the food in a toaster, hence it's regulation is helpful in obtaining a desired result from the cooking operation.

The above mentioned object is also solved by a toaster machine comprising the features of a system for providing consistency in cooking according to the invention.

The before mentioned object is also solved by a method for providing consistency in cooking from a toaster machine according to the claim 9.

According to the invention, method for providing consistency in cooking from a toaster machine comprises
- sensing a temperature from one or more plates of the toaster machine at a given point of time and generating a temperature value,
- counting a time by a timer since the start of the cooking,
- receiving the temperature values from the temperature sensor and the time since the start of cooking from the timer by a memory device, and
- storing the temperature value against the time by the memory device in a lookup table.

According to a further preferred embodiment of the invention, the method comprises
- sensing a pressure being exerted by the plate onto a food kept onto the plate, or between the plates at a given point of time and generating a pressure value, and
- receiving the pressure value from the pressure sensor by the memory device and storing the temperature value against the time in the lookup table.

According to a further preferred embodiment of the invention, the method comprises regulating at least one of the sensors, by a record control, to be switched on or off.

According to a further embodiment of the invention, the method comprising:
- providing a selection of a default profile using an input unit,
- receiving the selection of the default profile by a processing unit,
- based on the selection, accessing of the lookup table from the memory device by the processing unit, and generating a temperature regulation trigger, and
- receiving the temperature regulation trigger by a temperature regulator and regulating temperature of one or more plates of the toaster machine based on the temperature regulation trigger.

According to another embodiment of the invention, the method comprising:
- generating a pressure regulation after accessing the lookup table by the processing unit, and
- receiving the pressure regulation trigger by a pressure regulator and regulating pressure of one or more plates of the toaster machine based on the pressure regulation trigger.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 illustrates a schematic diagram of system for providing consistency in cooking from a toaster machine, according to an embodiment of the invention.
Fig. 2 illustrates a flow chart depicting generating of lookup table representing a default profile for a desired result of a cooking operation for a toaster machine, according to an embodiment of the invention.
Fig 3, illustrates a flow chart for operation of a toaster machine for running a default profile for cooking operation, according to an embodiment of the invention.

### Detailed Description of the Drawings

The present invention focuses on providing consistency in cooking, and to get a desired result from cooking operations consistently and independent to the person who is cooking the food inside a toaster machine. The invention focuses on generating a default profile for cooking with respect to the desired result from the cooking operation, and further provides means for using the default profile while cooking food inside the toaster machine.

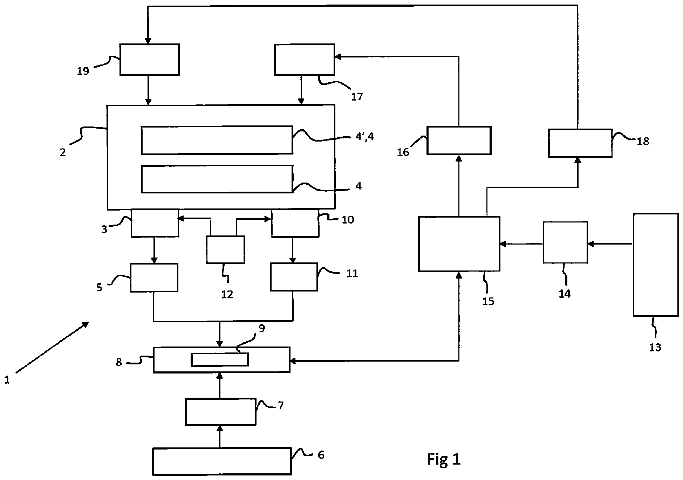

Fig. 1 shows schematics of a system1 for providing consistency in cooking from a toaster machine 2. The toaster machine 2 is provided with two plates 4 and the food is placed between these plates 4 for cooking the food. Sometimes, when open plate cooking is required, the food can be placed on any of the plates 4. In an alternate embodiment, where the structure of the toaster machine 2 is different, there may be only one or more than two plates 4 can be provided.

The plates are coupled with two sensors 3, 10, a temperature sensor 3 and a pressure sensor 10. The temperature sensor 3 senses temperature of either of the plates 4 or both the plates 4. In case, if there can be more than two plates 4 provided with the toaster machine 2, the temperature sensor 3 can be coupled to all the plates for sensing the temperature of the plates. In one embodiment, for each plate 4 one temperature sensor 3 can be provided for sensing temperature of the plate 4. The temperature sensor 3 generates a temperature value 5 based on the temperature sensed by it. The temperature sensor 3 keeps on sensing temperature from the plate/s 4 and keeps on generating the temperature values 5 at various point of time throughout a cooking operation.

The pressure sensor 10 senses pressure exerted by either of the plates 4 or both the plates 4. In one embodiment, the pressure sensor 10 is only coupled to top plate 4', 4 of the toaster machine 2, 1hich is placed over the food, and the pressure sensor 10 only senses pressure exerted by the top plate 4', 4 onto the food. In case, if there can be more than two plates 4 provided with the toaster machine 2, the pressure sensor 10 can be coupled to all the plates for sensing the pressure exerted by each of the plates onto the food. In one embodiment, for each plate 4 one pressure sensor 10 can be provided for sensing pressure exerted by that specific plate 4 onto the food. The pressure sensor 10 generates a pressure value 11 based on the pressure sensed by it. The pressure sensor 10 keeps on sensing pressure exerted by the plate/s 4 and keeps on generating the pressure values 4 at various point of time throughout the cooking operation.

The system also includes a timer 6, which keeps on counting the time 7 since the cooking operation has started.

The system also includes a memory device 8, which receives the temperature values 5, the pressure values 11 and the time 7 from the temperature sensor 3, the pressure sensor 10, the timer 6 respectively. Further, the memory device 8 stores the pressure values 11 and the temperature values 5 against the time 7 when these values are generated during cooking operation in a lookup table 9. This lookup table represents a default profile for the cooking operation, and the lookup table 9 can be used to repeat desired result from similar cooking operation.

In one embodiment, the pressure sensor 10 is not provided, and only the temperature sensor 3 is provided. In such cases, the memory device 8 shall only receive the temperature values 5, and store them against the time 7 when these values are generated during cooking operation, in the lookup table 9.

The sensors 3, 10 are not required to always be active, and they are required to be active when a default profile is required to be created for a particular cooking operation. To regulate these sensors 3, 10 for switching on or off, a record control 12 is provided, which regulates these sensors 3, 10. When the record control 12 is switched on, the sensors 3, 10 are also switched on, and when the record control 12 is switched off, the sensors 3, 10 are also switched off.

In another embodiment of the invention, when the record control 12 is switched off, even the time 7 is stopped from being sent to the memory device 8. Further, the lookup table 9 is also completed with switching off of the record control 12. And for generating a different default profile for a different cooking operation, a new lookup table 9 can be generated, when the record control 12 is switched on again.

The system 1 is also provided with an input unit 13, which has an option to make a selection 14 of the default profile. In one embodiment, multiple options of different default profile for different cooking operations can be provided, and a user can make a selection 14 for the desired default profile.

The system 1 is also provided with a processing unit 15, which receives the selection 14 of the default profile, and based on the selection 14, accesses the lookup table 9. And accordingly different temperature values 5 and pressure values 11 are stored for a different time 7 of the cooking operation, wherein the processing unit 15 keeps on generating a temperature regulation trigger 16 and a pressure regulation trigger 18 respectively. These temperature regulation triggers 16 and the pressure regulation triggers 18 are received by a temperature regulator 17 and the pressure regulator 19. The temperature regulator 17 regulates temperature of one or more plates of the toaster device 2 based on the temperature regulation triggers 16 received, and the pressure regulator regulates pressure to be exerted by one or more plates onto the food based on the pressure regulation triggers 18 received. In another embodiment, where lookup table 9 does not include the pressure values 11, hence no pressure regulation triggers 18 are generated. And in such cases the pressure exerted on the food is not regulated.

In an alternate embodiment, the pressure regulation trigger 18 is received for only regulating pressure being exerted by the top plate 4', 4, and accordingly the pressure regulator 19 shall only regulate pressure being exerted by the top plate 4', 4.

In another embodiment, the lookup table 9 can be transferred to a memory device 8 of another toaster machine 2 or to another memory storage unit using a computer networking technique. In one embodiment, the memory device 8 is replaceable, like a memory card, and can be taken out of the system 1 or the toaster machine 2, in case that all components of the system 1 are placed within the toaster machine 2. Further, the memory device 8 can be inserted in any similar toaster machine 2 to achieve consistency of cooking operation from the new toaster machine 2 too. In another embodiment, the lookup table 9 can be copied from the memory device 8 by using known techniques like USB, Bluetooth etc.

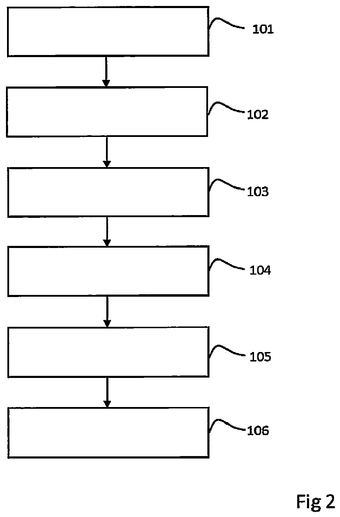

Figure 2 illustrates a flow chart depicting generating of lookup table representing a default profile for a desired result of a cooking operation for a toaster machine. In step 101, the food is kept between the plates of the toaster machine, and the plates are closed. In step 102, the toaster machine is switched on for operation. In step 103, the record control is also switched on, and further the temperature sensor and the pressure sensor are also switched on, and starts sensing the temperature and the pressure respectively at various point of time during the cooking operation. In step 104, the temperature sensor starts generating the temperature values at different point of time during cooking, the pressure sensors start generating the pressure values at different point of time during cooking, and a timer counts in time during the cooking. In step 105, the temperature values, the pressure values, and the time is sent regularly to a memory device, which stores the values in a lookup table. In step 106, the record control is switched off, and accordingly the sensors are also switched off, and the default profile for the cooking cooperation is created in form of the lookup table.

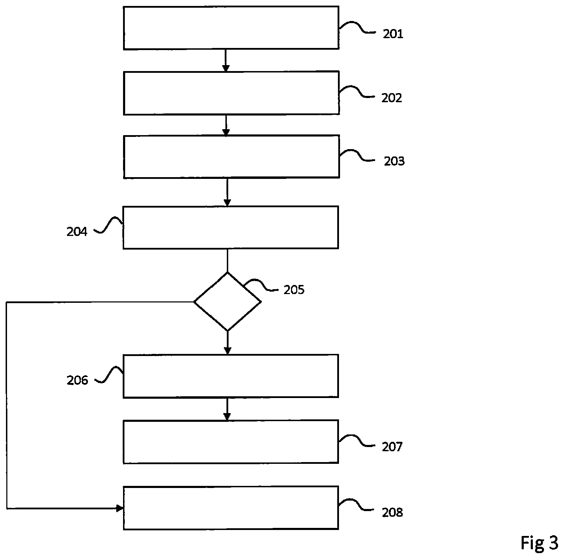

Figure 3 illustrates a flow chart for operation of a toaster machine for running a default profile for cooking operation. In step 210, the toaster is switched on. In step 202, user inputs a selection of a default profile through an input unit. In step 203, the selection of the default profile is received by the processing unit, which further processes the selection. In step 204, the processor accesses the lookup table from the memory device. In step 205, the processing unit checks whether the cooking time is up based on the time stored in the lookup table for finishing of the cooking operation. If the cooking time is over, the processing unit switches of pressure and temperature regulators to complete the cooking operation. If the cooking time is still not over, in step 206, the processing unit generates pressure regulation triggers and temperature regulation triggers regularly as the cooking time moves ahead, based on the pressure values and the temperature values stored inside the lookup table. In step 207, the triggers are received by the pressure regulator and the temperature regulator to regulate the pressure exerted by the plate/s on the food, and the temperature of the plate/s respectively.

Thus, the present invention provides a system 1 for providing consistency in cooking from a toaster machine 2. The system 1 includes a temperature sensor 3 coupled to one or more plates 4 of the toaster machine 2, and senses a temperature of the plate 4 of the toaster machine 2 at a given point of time and generates a temperature value 5. The system 1 also includes a timer 6 which counts a time 7 since the start of the cooking, and a memory device 8 which receives the temperature values 5 from the temperature sensor 3 and the time 7 since the start of cooking from the timer 6, and stores the temperature values 5 against the time 7 in a lookup table 9.

### List of reference numbers

- 1: system
- 2: toaster machine
- 3: temperature sensor
- 4: plate/s of the toaster machine
- 4': top plate of the toaster machine
- 5: temperature value
- 6: timer
- 7: time
- 8: memory device
- 9: lookup table
- 10: pressure sensor
- 11: pressure value
- 12: record control
- 13: input unit
- 14: selection of a default profile
- 15: processing unit
- 16: temperature regulation trigger
- 17: temperature regulator
- 18: pressure regulation trigger
- 19: pressure regulator
- 101: Step of putting food between the plates of the toaster
- 102: Step of switching on the toaster
- 103: Step of switching on the record control
- 104: Step of generating of pressure value, temperature value, and time
- 105: Step of storing the values in a lookup table
- 106: Step of switching off the record control
- 201: Step of switching on the toaster
- 202: Step of receiving a selection of a default profile
- 203: Step of receiving and processing the selection by processing unit
- 204: Step of accessing the lookup table by the processing unit
- 205: Step of determining, if cooking time is over
- 206: Step of generating pressure regulation trigger and temperature regulation trigger
- 207: Step of receiving the triggers by the regulators and regulating pressure and temperature of the plates
- 208: Step of switching of the regulators on reaching end of time of cooking operation

## Claims

1. A system (1) for providing consistency in cooking from a toaster machine (2) comprising:
- a temperature sensor (3) coupled to one or more plates (4) of the toaster machine (2), adapted to sense a temperature of the plate (4) of the toaster machine (2) at a given point of time and to generate a temperature value (5);
- a timer (6) adapted to count a time (7) since the start of the cooking; and
- a memory device (8) adapted to receive the temperature values (5) from the temperature sensor and the time (7) since the start of cooking from the timer (6), and adapted to store the temperature values (5) against the time (7) in a lookup table (9).

2. The system (1) according to the claim 1 comprising:
- a pressure sensor (10) coupled to one or more plates (4) of the toaster machine (2), adapted to sense a pressure being exerted by the plate or plates (4) onto a food kept onto the plate (4) or between the plates (4) at a given point of time and to generate a pressure value (11),
wherein the memory device (8) is adapted to receive the pressure value (11) from the pressure sensor (10) and to store the pressure value (11) against the time (7) in the lookup table (9).

3. The system (1) according to the claim 2, wherein the pressure sensor (10) is coupled to a top plate (4, 4') and adapted to sense the pressure exerted by the top plate (4, 4') onto the food kept within the toaster machine (2).

4. The system (1) according to any of the claims 1 to 3 comprising:
- a record control (12) adapted to regulate at least one of the sensors (3, 10) to be switched on or off.

5. The system (1) according to any of the claims 1 to 4 comprising:
- an input unit (13) adapted to receive a selection (14) of a default profile;
- a processing unit (15) adapted receive the selection (14) of the default profile, and based on the selection (14) adapted to access the lookup table (9) from the memory device (8), and adapted to generate a temperature regulation trigger (16); and
- a temperature regulator (17) adapted to receive the temperature regulation trigger (16) and to regulate temperature of one or more plates (4) of the toaster machine (2) based on the temperature regulation trigger (16).

6. The system (1) according to the claim 5, wherein the processing unit (15) adapted to generate a pressure regulation trigger (18) after accessing the lookup table (9), the system (1) further comprising:
- a pressure regulator (19) adapted to receive the pressure regulation trigger (18) and to regulate pressure of one or more plates (4) of the toaster machine (2) based on the pressure regulation trigger (18).

7. The system (1) according to the claim 6, wherein the pressure regulator (19) is adapted to regulate pressure of the top plate (4', 4) of the toaster machine (2) based on the pressure regulation trigger (18).

8. A toaster machine (2) comprising the system (1) for providing consistency in cooking according to any of the claims 1 to 7.

9. A method for providing consistency in cooking from a toaster machine (2) comprising:
- sensing a temperature by a temperature sensor (3) from one or more plates (4) of the toaster machine (2) at a given point of time and generating a temperature value (5);
- counting a time (7) by a timer (6) since the start of the cooking;
- receiving the temperature values (5) from the temperature sensor (3) and the time (7) since the start of cooking from the timer (6) by a memory device (8),
- storing the temperature value (5) against the time (7) in the memory device (8) in a lookup table (9).

10. The method according to claim 9 comprising:
- sensing a pressure being exerted by the plate (4) onto a food kept onto the plate (4), or between the plates (4) at a given point of time by a pressure sensor (10) and generating a pressure value (11);
- receiving the pressure value (11) from the pressure sensor (10) by the memory device (8) and storing the pressure value (11) against the time (7) in the lookup table (9).

11. The method according to any of the claims 9 or 10 comprising:
- regulating at least one of the sensors (3, 10), by a record control (12), to be switched on or off.

12. The method according to any of the claims 9 to 11 comprising:
- providing a selection (14) of a default profile using an input unit (13);
- receiving the selection (14) of the default profile by a processing unit (15);
- based on the selection (14), accessing of the lookup table (9) from the memory device (8) by the processing unit (15), and generating a temperature regulation trigger (16); and
- receiving the temperature regulation trigger (16) by a temperature regulator (17) and regulating temperature of one or more plates (4) of the toaster machine (2) based on the temperature regulation trigger (16).

13. The method according to claim 12 comprising:
- generating a pressure regulation trigger (18) after accessing the lookup table (9) by the processing unit (15); and
- receiving the pressure regulation trigger (18) by a pressure regulator (19) and regulating pressure exerted by one or more plates (4) of the toaster machine (2) based on the pressure regulation trigger (18).
